Europäisches Patentamt

European Patent Office

Office européen des brevets

(19)

(11)     EP 0 910 604 B1

(12)                       EUROPEAN PATENT SPECIFICATION

(45) Date of publication and mention
     of the grant of the patent:
     **26.04.2000 Bulletin 2000/17**

(51) Int Cl.7: **C08J 5/12**
     // C08L33:00

(21) Application number: **97929394.1**

(22) Date of filing: **01.07.1997**

(86) International application number:
     **PCT/GB97/01758**

(87) International publication number:
     **WO 98/01499 (15.01.1998 Gazette 1998/02)**

(54) **METHOD OF MAKING AN ARTICLE FROM AN ACRYLIC MATERIAL**

VERFAHREN ZUR HERSTELLUNG EINES GEGENSTANDES AUS EINEM ACRYLMATERIAL

PROCEDE DE FABRICATION D'UN ARTICLE A PARTIR D'UN MATERIAU ACRYLIQUE

(84) Designated Contracting States:
     **AT BE CH DE DK ES FI FR GB GR IE IT LI LU MC
     NL PT SE**

(30) Priority: **10.07.1996  ZA 9605848
               08.10.1996  ZA 9608471**

(43) Date of publication of application:
     **28.04.1999  Bulletin 1999/17**

(73) Proprietor: **AECI LIMITED
     Woodmead, Sandton 2128 (ZA)**

(72) Inventor: **TINKER, Paul
     Mulbarton Johannesburg 2059 (ZA)**

(74) Representative: **W.P. Thompson & Co.
     Coopers Building,
     Church Street
     Liverpool L1 3AB (GB)**

(56) References cited:
     **EP-A- 0 356 316          WO-A-93/13460**

     • **PATENT ABSTRACTS OF JAPAN vol. 003, no.
       011 (C-035), 30 January 1979 & JP 53 133275 A
       (ASAHI CHEM IND CO LTD), 20 November 1978,**

**Description**

## BACKGROUND OF THE INVENTION

This invention relates to a method of making an article from an acrylic material and a backing material, and to a process of recovering an acrylic material from an article made by this method.

Many articles, such as sanitary ware, are presently made from acrylic sheet material backed with a backing material such as a glass reinforced plastics material. The backing material is applied in order to reinforce the acrylic sheet material to enable the article, for example a bath or a sink or a shower tray, to conform to the specified requirements in respect of dimensional and heat stability in normal service.

The backing material, for example a glass reinforced plastic material, adheres strongly to the acrylic sheet material and is extremely difficult to separate therefrom. However, an acrylic material is a material which is readily recycled by depolymerisation back to its monomer, at high levels of efficiency, via the application of heat at approximately 500°C. In order to carry out such recycling, the backing material must be removed from the acrylic material, as the components of the backing material, for example the plastics material and the glass fibre, would contaminate the depolymerisation plant rendering it inoperative. However, due to the difficulty of separating backing materials from acrylic sheet materials, much of such acrylic sheet material is rendered unavailable for depolymerisation recycling. There is thus a need for a method by which an article made from an acrylic material and a backing material can later be separated into its component parts so that the acrylic material may be recycled.

## SUMMARY OF THE INVENTION

According to a first aspect of the invention there is provided a method of making an article from an acrylic material and a backing material, which method includes the steps of:

(1) forming the acrylic material into a desired shape;

(2) applying to a side of the acrylic material a bonding material which bonds to the acrylic material and to the backing material at ambient temperatures but which causes delamination of the backing material from the acrylic material at elevated temperatures of from 130°C so that the acrylic material may be recovered; and

(3) applying to the product of steps (1) and (2), the backing material with the layer of the bonding material between the acrylic material and the backing material so that the backing material adheres to the acrylic material to form the article.

By acrylic material there is meant thermoplastic polymer or co-polymer of acrylic acid, methacrylic acid, esters of these acids or acrylonitrile.

Step (2) may be carried out before or after step (1).

According to a second aspect of the invention there is provided an article made by the method described above.

According to a third aspect of the invention there is provided a process of recovering an acrylic material from an article made by the method described above which process includes the steps of:

(a) heating the article to an elevated temperature, for example in the thermo-elastic forming range of the acrylic material, so that the backing material delaminates from the acrylic material; and

(b) recovering the acrylic material.

In step (1), the acrylic material is preferably an acrylic sheet material.

In step (1), the acrylic material may be formed into the desired shape by vacuum and/or heat forming.

In step (2) the layer of a bonding material made be applied to a side of the acrylic material by:

(i) applying the layer of a bonding material to a surface of a mould for the acrylic material; and

(ii) introducing the acrylic material into the mould and moulding the acrylic material to a desired shape with the layer of the bonding material thereon.

The layer of the bonding material may be formed from a composition of a suitable polymeric material in a suitable solvent therefor, or the layer of the bonding material may be formed from a film of a suitable polymeric material.

A preferred polymeric material is a polyurethane polymer. At temperatures in the thermo-forming range of the acrylic material, i.e. in the range 140°C to 170°C inclusive, polyurethane loses a substantial part of its strength. Further, the acrylic material generally has a strong elastic memory, and at a temperature in the thermo-forming range, exerts strong forces on the layer of the polyurethane, which yields, enabling the acrylic material to revert to its original form and thus to delaminate the backing material therefrom.

Other polymeric materials which may be used to form the bonding layer include high impact polystyrene (HIPS), polystyrene, acrylonitrile-styrenebutadiene (ABS), polymethyl methacrylate (PMMA), styrene acrylonitrile (SAN), crystal polystyrene, high molecular weight polystyrene, polyvinyl chloride (PVC), acrylic-styrene-acrylonitrile (ASA), and styrene butadiene, each used either alone or in combination with each other or in combination with a polyurethane polymer.

As stated above, the layer of the bonding material bonds to the acrylic material and to the backing material at ambient temperatures but causes delamination of the backing material from the acrylic material at elevated temperatures. These elevated temperatures may be in the thermoelastic forming range of the acrylic material or may be below this temperature.

The layer of the bonding material may be applied in any suitable manner. For example, when the layer of the bonding material is formed from a liquid composition, the layer may be applied by brushing or spraying. Alternatively, when the layer of the bonding material is formed from a film of a polymeric material, then the film may be placed on the acrylic material or placed on a surface of a mould for the acrylic material.

For example, where the bonding material is a composition of a polyurethane polymer, the polyurethane polymer is preferably dissolved in a suitable solvent and the combination is then applied to the acrylic material by brushing or spraying. Thereafter, the solvent evaporates leaving a layer of polyurethane bonded to the acrylic material.

Another preferred bonding material is high molecular weight polystyrene, for example Dow Styron 648 (Registered Trade Mark). This bonding material is preferably applied by dissolving it in a suitable solvent carrier such as for example methyl ethyl ketone optionally in conjunction with a higher boiling point solvent. The composition so formed may then be applied brushing or spraying.

In step (3), the backing material may be any suitable backing material, for example a glassfibre reinforced plastics material (GRP), a plastics material reinforced with fibres other than glass fibres, for example hessian, or a polyurethane foam material.

The backing material may be applied to a part or parts or to the whole of the shaped acrylic material.

## DESCRIPTION OF EMBODIMENTS

The crux of the invention is that an article made from an acrylic material and a backing material, includes a layer between the acrylic material and the backing material of a bonding material which bonds to the acrylic material and to the backing material at ambient temperatures, but which causes delamination of the backing material from the acrylic material at elevated temperatures and particularly at temperatures in the thermo-elastic forming range of the acrylic material. This means that the acrylic material may be recovered from the article for recycling.

In step (1) of the method of the invention, the acrylic material, generally an acrylic sheet material, is formed into a desired shape for example by vacuum or heat forming.

Examples of suitable acrylic materials are:

(a) Sanitaryware grade cell cast acrylic sheet based on polymerised methyl methacryate and chemically cross-linked with glycol dimethacrylate, of thickness typically 4 or 5mm;
(b) Uncross-linked polymerised methyl methacrylate cell cast sheet;
(c) Extruded poly methyl methacrylate sheet.

Thereafter the acrylic material is optionally sanded to provide a suitable surface for the application of the composition of step (2).

In step (2) of the method of the invention, there is then applied to the shaped acrylic material a bonding material which bonds to the acrylic material and the backing material at ambient temperatures but which causes delamination of the backing material from the acrylic material at elevated temperatures.

Alternatively, step (2) may be carried out before step (1) i.e. the bonding material may be applied to the acrylic material before it is shaped.

Further alternatively, step (2) may be carried out by applying the layer of a bonding material to a surface of mould for the acrylic material and then introducing the acrylic material into the mould and moulding the acrylic material to a desired shape with the layer of the bonding material thereon.

For example, a thin extruded film of a polymeric material may be placed against a glass sheet which comprises a mould in which cell-cast acrylic material is polymerised. The film is held in place by a PVC gasket and clips normally used in a cell-casting process. An acrylic syrup is then introduced into the mould and polymerised in the normal way. the film of polymeric material being incorporated into a surface of the acrylic sheet thus formed to form a surface layer which subsequently is able to bond to the backing material.

Alternatively, a composition of a polymeric material dissolved in a solvent or in a monomer for the polymeric material may be applied to a glass sheet which comprises a mould in which cell-cast acrylic material is polymerised, for example by means of a roller, spray or brush. The viscosity of this composition is such that the layer thereof is not "washed" off when the acrylic syrup is introduced into the mould. On polymerisation of the acrylic material, the bonding material is incorporated into the surface of the acrylic sheet such that the backing material may subsequently be bonded thereto.

The composition of step (2) must not only bond to the acrylic material and the backing material at ambient temperatures, but also under normal service and test temperatures and conditions.

For example, articles of the invention have been subjected to the following tests:

a) Continuous boiling of water in an article of the invention, being a sink unit bowl, using an electric immersion heater over a period of time of several weeks.

b) Subjecting an article of the invention alternatively to hot and cold water (90°C/20°C) for a period of time.

c) Applying a pan containing hot oil at 180°C, to an article of the invention, being a sink unit draining board and bowl, and allowing the oil to cool to 120°C, and then repeating the procedure several times.

The articles of the invention showed no deformation or delamination after these tests.

The bonding material may be a composition of a polyurethane polymer, which may be dissolved in a suitable solvent for application. The polyurethane polymer is preferably a mainly linear polyurethane polymer with a low level (about 0,1%) hydroxyl content. This polymer exhibits a very low thermoplasticity and an extremely high rate of crystallisation.

The polyurethane polymer may be dissolved in a solvent such as methyl ethyl ketone, at a level of approximately 15%, although this may be varied to give a greater or lesser viscosity.

In order to give the required heat resistance, the polyurethane polymer is preferably cross linked chemically with the addition of MDI (diphenylmethane-4,4'-diisocyanate), preferably with a functionality of 2,7 minimum, more preferably with a functionality in the range of 2,85 to 3. The MDI may be added as is, or in a solvent, to the solution of the polyurethane in the solvent, at levels of 1 to 3% solids, prior to applying the composition to the acrylic material.

The solution may be applied by brushing or by spraying or any other suitable means. The solvent rapidly evaporates leaving a bonded film of cross-linked polyurethane on the acrylic material.

Suitable polyurethanes include Desmocoll 540 (Registered Trade Mark) from Bayer; and Irostic P9820 (Registered Trade Mark) from Marton International. MDI is also available from Bayer and Marton International and as Suprasec 5005 (Registered Trade Mark) and Suprasec 20885 (Registered Trade Mark) from ICI.

Various other polymeric materials are also suitable to form the layer of the bonding material. These polymeric materials include high impact polystyrene, polystyrene, ABS, polymethyl methacrylate, SAN, crystal polystyrene, high molecular weight polystyrene, PVC, ASA and styrene butadiene, either alone or in combination with each other or in combination with a polyurethane polymer.

The vicat softening and heat distortion temperature of different grades of the polymeric materials have been found greatly to affect the bonding and delamination properties of the article formed from the acrylic material and the backing material. Thus, articles may be made to have a range of delamination temperatures and resistance to delamination.

For example, a low heat distortion temperature (HDT)/low vicat material such as high impact polystyrene (HIPS) will give an excellent bond at temperatures below 100°C but readily separates at temperatures lower than the thermoforming temperatures, e.g. less than 165°C. On the other hand, high molecular weight polystyrene will give a much stronger bond at higher temperatures which enables it to be used where the article must pass, for example, hot oil resistance tests, for example at temperatures of 230°C for short periods of time, or long term boiling tests.

A preferred bonding material is high molecular weight polystyrene such as for example Dow Styron 648 (Registered Trade Mark) as it is cost effective, bonds very well under test procedures and releases very cleanly and easily when required.

The preferred method of application of high molecular weight polystyrene is by dissolving it in a suitable solvent carrier such as for example methyl ethyl ketone. The composition so formed may be applied before or after vacuum forming of the acrylic material.

When the composition is applied as a spray, a higher boiling point solvent such as toluene, xylene and white spirit, may be used in conjunction with the methyl ethyl ketone to prevent stringing.

An optimal composition comprises a 15% by mass solution of high molecular weight polystyrene in methyl ethyl ketone.

Another suitable solvent carrier for the high molecular weight polystyrene is an acrylic monomer.

In step (3), the backing material is applied to the product of steps (1) and (2) in a conventional manner so that the backing material adheres to the acrylic material.

For example, when the backing material is a glass reinforced plastics material, the fibreglass and resin may be sprayed on to the product of steps (1) and (2) with a chopper gun.

The articles produced by this method are suitable for use in the normal manner, without any delamination of the backing material from the acrylic material occurring during use.

The invention also covers a process of recovering an acrylic material from an article made by the method described above by heating the article to a elevated temperature for example in the thermo-elastic forming range of the acrylic material so that the backing material delaminates from the acrylic material, and recovering the acrylic material.

The mechanism whereby the delamination of the backing material from the acrylic material occurs, is that the layer between the acrylic material and the backing material loses a substantial part of its strength at elevated temperatures e.g temperatures in the thermo-elastic forming range of the acrylic material, i.e. at temperatures between 140°C and 170°C inclusive. Further, the acrylic material has a strong elastic memory and at 140°C to 170°C, exerts strong forces on the intermediate layer, which yields, enabling the acrylic material to revert to its original flat form and thus causing delamination of the backing material from the acrylic material.

For certain bonding materials, temperatures lower than 140°C may be sufficient for delamination, i.e. temperatures in the range of 90°C to 140°C inclusive, but temperatures of 130°C and above are preferred, for speed of delamination.

Various examples of the invention will now be given.

## Example 1

Reinforcing of a polyurethane polymer with an acrylic polymer.

A composition for forming a layer of a bonding material is comprised of:

| | |
|---|---|
| 15% Desmocoll 540* in methyl ethyl ketone | 100 parts |
| 15% Suprasec 2085* (MDI) in methyl ethyl ketone | 100 parts |
| 15% Perspex C.P.80* (Polymethyl methacrylate) in methylene chloride | 100 parts |
| | 300 parts |

All percentages are by mass.
(* Registered Trade Marks)

When applied to a flat sheet of acrylic material, such as 4mm sanitary ware grade 'Perspex' (Registered Trade Mark), the acrylic material is able to be vacuum formed, subsequently reinforced with GRP and perform acceptably in normal usage and testing without delamination. When subsequently heated to 165°C, the acrylic sheet delaminates to give a substantially intact sheet and a GRP shell, which may both then be further processed for recycling by existing means. The above composition enables the bonding layer to withstand hot oil at 230°C/min whereas a non reinforced purely polyurethane bonding layer would fail such a test in the context of a sink or sink bowl unit for instance.

Similarly, the polyurethane may be also reinforced with polystyrene based resins, e.g general purpose crystal polystyrene, high molecular weight polystyrene, and ABS.

## Example 2

Bonding layer using high impact polystyrene.

A composition for forming a layer of a bonding layer is comprised of:

| | |
|---|---|
| Dow Styron 472* | 10-20 parts by mass |
| Methyl ethyl ketone | 90-80 parts by mass |

(* Registered Trade Mark)

When applied to an acrylic sheet either before or after vacuum forming, this composition gives a satisfactory bond to subsequently applied GRP and will withstand normal service and tests such as SABS 1402 thermal cycling (90°C/15°C - cycles) but readily delaminate at relatively low temperatures (e.g 130-140°C). Whilst such a bonding layer composition will not support acrylic/GRP adhesion against 230°C hot oil, it delaminates so easily at the relatively low temperatures quoted above that there are economic advantages opposite delamination costs in terms of energy use.

Note that other carrier solvents may be used as solvents for styrene based resins, for example methylene chloride and other ketones.

## Example 3

Bonding layer using a general purpose polystyrene.
A composition for forming a layer of a bonding material is comprised of:

| Dow Styron 678E (Registered Trade Mark) | 10 parts by weight |
|---|---|
| Methyl ethyl ketone/dichloromethane 50/50 | 90 parts by weight |

Here, due to higher heat distortion properties, the bond strength is better than HIPS at elevated temperatures and is able to resist the long term effects of for instance, boiling water in a sink bowl without delamination, yet will readily separate at 165°C in an oven.

## Example 4

Bonding layer using high molecular weight polystyrene.
A composition for forming a bonding layer is comprised of:

| Dow Styron 648 (Registered Trade Mark) (which is a high molecular weight polystyrene) | 15 parts by weight |
|---|---|
| Methyl ethyl ketone | 85 parts by weight |

This composition may be applied to an acrylic sheet both before or after vacuum forming. Due to the nature of the high heat, high molecular weight composition it is able to be vacuum formed without difficulty using standard ovens commonly used for sanitary ware without sticking to either the oven interior surface or vacuum forming mould. In addition it is more resistant to the styrene monomer present in GRP polyester resins. Such a bonding layer is able to resist all common tests including long term boiling water inside the bowl or bath and hot oil at 230°C/ min contact, yet delaminate effectively on placing in an oven at 165°C.

## Example 5

Non-solvent formation of a bonding layer.
As the use of organic solvents in any process may be considered environmentally undesirable, there are advantages in the use of a non-solvent based bonding layer. Two such methods of obtaining such a layer are described:-

1 A thin extruded film (up to 2mm thick, but normally 0.1 - 1,0mm thick) of a polymeric material mentioned above may be placed against a glass sheet which comprises a mould in which cell-cast acrylic is polymerised. This film is held in place by the PVC gasket and clips normally used in a cell-casting process. When an acrylic syrup is introduced into the mould cell and polymerised in the normal way, the polymeric film is incorporated into the surface of the acrylic sheet thus formed, and forms a surface layer which subsequently is able to bond to GRP reinforcement and also delaminate on heating to thermoforming temperatures.

2 Alternatively, the polymeric material may be predissolved in methyl methacrylate monomer and the solution applied to a glass cell surface by roller, spray, brush or other convenient means. The viscosity of this solution is such that the applied wet film is not 'washed' off when the main body of the acrylic syrup is introduced into the cell. On polymerisation the monomer carrier is converted into PMMA and the polymeric material (e.g polystyrene) is incorporated into the surface of the acrylic sheet. This enables the GRP subsequently applied to bond and thermo-release for recycling.

The various polymeric materials mentioned above all have various advantages such as cost, ease of use, bond strength and temperature at which delamination occurs, and the like.
The method of the invention has the advantage that, articles such as sanitary ware made by the method may now be recycled at the end of their life, or articles rejected during manufacture or damaged during distribution may also be recycled, which has economic and ecological advantages.

**Claims**

1. A method of making an article from an acrylic material and a backing material, includes the steps of:

   (1) forming the acrylic material into a desired shape;
   (2) applying to a side of the acrylic material a bonding material which bonds to the acrylic material and to the backing material at ambient temperatures but which causes delamination of the backing material from the acrylic material at elevated temperatures of from 130°C so that the acrylic material may be recovered; and
   (3) applying to the product of steps (1) and (2), the backing material with the layer of the bonding material between the acrylic material and the backing material so that the backing material adheres to the acrylic material to form the article.

2. A method according to claim 1 wherein step (1) is carried out before step (2).

3. A method according to claim 1 wherein step (2) is carried out before step (1).

4. A method according to any one of claims 1 to 3 wherein the acrylic material is an acrylic sheet material.

5. A method according to any one of claims 1 to 4 wherein in step (1) the acrylic material is formed into the desired shape by vacuum forming or heat forming.

6. A method according to any one of claims 1 to wherein step (2) is carried out by:

   (i) applying the layer of a bonding material to a surface of a mould for the acrylic material; and
   (ii) introducing the acrylic material into the mould and moulding the acrylic material to a desired shape with the layer of the bonding material thereon.

7. A method according to any one of claims 1 to 6 wherein the bonding material is selected from the group comprising:

   (A) a composition of a polymeric material in a solvent therefor; and
   (B) a film of a polymeric material.

8. A method according to claim 7 wherein the polymeric material is a polyurethane polymer.

9. A method according to claim 7 wherein the polymeric material is selected from the group consisting of high impact polystyrene, polystyrene, acrylonitrile-styrene-butadiene, polymethylmethacrylate, styrene acrylonitrile, crystal polystyrene, high molecular weight polystyrene, polyvinyl chloride, acrylic-styrene-acrylonitrile, and styrene butadiene, each used either alone or in combination with each other or in combination with a polyurethane polymer.

10. A method according to claim 9 wherein the polymeric material is high molecular weight polystyrene dissolved in a solvent carrier.

11. A method according to claim 10 wherein the suitable solvent carrier is methyl ethyl ketone.

12. A method according to any one of claims 1 to 11 wherein in step (3) the backing material is selected from the group consisting of a glassfibre reinforced plastics material, a plastics material reinforced with fibres other than glassfibres, and a polyurethane foam material.

13. A method according to any one of claims 1 to 12 wherein the backing material is applied to a part or parts or to the whole of the shaped acrylic material.

14. An article made from an acrylic material and a backing material by a method which includes the steps of:

   (1) forming the acrylic material into a desired shape;
   (2) applying to a side of the acrylic material a bonding material which bonds to the acrylic material and to the backing material at ambient temperatures but which causes delamination of the backing material from the acrylic material at elevated temperatures of from 130°C so that the acrylic material may be recovered; and
   (3) applying to the product of steps (1) and (2), the backing material with the layer of the bonding material between the acrylic material and the backing material so that the backing material adheres to the acrylic material to form the article.

15. A process of recovering an acrylic material from an article made from an acrylic material and a backing material by a method which includes the steps of:

(1) forming the acrylic material into a desired shape;
(2) applying to a side of the acrylic material a layer of a bonding material which bonds to the acrylic material and to the backing material at ambient temperatures but which causes delamination of the backing material from the acrylic material at elevated temperatures of from 130°C so that the acrylic material may be recovered; and
(3) applying to the product of steps (1) and (2), the backing material with the layer of the bonding material between the acrylic material and the backing material so that the backing material adheres to the acrylic material to form the article;

which process includes the steps of:

(a) heating the article to an elevated temperature so that the backing material delaminates from the acrylic material; and
(b) recovering the acrylic material

16. A process according to claim 15 wherein in step (a) the elevated temperature is in the thermo-elastic forming range of the acrylic material.

17. A process according to claim 16 wherein in step (a) the temperature is from 140°C to 170°C inclusive.

18. A process according to claim 15 wherein in step (a) the elevated temperature is from 130°C to 140°C inclusive.


**Patentansprüche**

1. Verfahren zur Herstellung eines Gegenstandes aus einem Acrylmaterial und einem Hinterkleidungsmaterial, welches die Schritte einschließt:

(1) Formung des Acrylmaterials in eine gewünschte Gestalt;

(2) Applizierung eines Verbindungsmaterials an eine Seite des Acrylmaterials, wobei das Verbindungsmaterial an das Acrylmaterial und an das Hinterkleidungsmaterial bei Umgebungstemperaturen bindet aber welches eine Schichtentrennung des Hinterkleidungsmaterials von dem Acrylmaterial bei erhöhten Temperaturen von 130 °C an bewirkt, so daß das Acrylmaterial zurückerhalten werden kann; und

(3) Applizierung des Hinterkleidungsmaterials an das Produkt der Schritte (1) und (2), wobei die Schicht des Verbindungsmaterials zwischen dem Acrylmaterial und dem Hinterkleidungsmaterial angeordnet ist, so daß das Hinterkleidungsmaterial an dem Acrylmaterial anhaftet, um den Gegenstand au formen.

2. Verfahren nach Anspruch 1, **dadurch gekennzeichnet**, daß der Schritt ((1) vor dem Schritt (2) ausgeführt wird.

3. Verfahren nach Anspruch 1, **dadurch gekennzeichnet**, daß der Schritt (2) vor dem Schritt (1) ausgeführt wird.

4. Verfahren nach einem der Ansprüche 1 bis 3, **dadurch gekennzeichnet**, daß das Acrylmaterial ein folien- bzw. plattenförmiges Acrylmaterial ist.

5. Verfahren nach einem der Ansprüche 1 bis 4, **dadurch gekennzeichnet**, daß im Schritt (1) das Acrylmaterial durch Vakuumformung oder durch Wärmeumformung in die gewünschte Gestalt umgeformt wird.

6. Verfahren nach einem der Ansprüche 1 bis 5, **dadurch gekennzeichnet**, daß Schritt (2) ausgeführt wird durch:

(i) Applizierung der Schicht eines Verbindungsmaterials an eine Oberfläche einer Form für das Acrylmaterial;

EP 0 910 604 B1

und

(ii) Einführung des Acrylmaterials in die Form und Formung des Acrylmaterials in eine gewünschte Gestalt, wobei die Schicht des Verbindungsmaterials sich auf diesem befindet.

7. Verfahren nach einem der Ansprüche 1 bis 6, **dadurch gekennzeichnet**, daß das Verbindungsmaterial ausgewählt ist aus der Gruppe, enthaltend:

(A) eine Zusammensetzung eines polymeren Materials in einem Lösungsmittel für dieses; und

(B) einen Film eines polymeren Materials.

8. Verfahren nach Anspruch 7, **dadurch gekennzeichnet**, daß das polymere Material ein Polyurethanpolymer ist.

9. Verfahren nach Anspruch 7, **dadurch gekennzeichnet**, daß das polymere Material ausgewählt ist aus der Gruppe bestehend aus einem hochschlagfesten PoLystyrol, Polystyrol, AcrylnitrilStyrol-Butadien, Polymethylmethacrylat, Styrol-Acrylnitril, kristallines Polystyrol, Polystyrol mit hohem Molekulargewicht, Polyvinylchlorid, Acryl-Styrol-Acrylnitril und Styrol-Butadien, jeweils verwendet entweder allein oder in Kombination miteinander oder in Kombination mit einem Polyurethanpolymer.

10. Verfahren nach Anspruch 9, **dadurch gekennzeichnet**, daß das polymere Material Polystyrol mit hohem Molekulargewicht ist, welches in einem Lösungsmittelträger gelöst ist.

11. Verfahren nach Anspruch 10, **dadurch gekennzeichnet**, daß der geeignete Lösungsmittelträger Methylethylketon ist.

12. Verfahren nach einem der Ansprüche 1 bis 11, **dadurch gekennzeichnet**, daß in Schritt (3) das Hinterkleidungsmaterial ausgewählt ist aus der Gruppe bestehend aus einem glasfaserverstärktem Kunststoffmaterial, einem faserverstärktem Kunststoffmaterial, welches mit anderen Fasern als mit Glasfasern Verstärkt ist, und einem Polyurethan-Schaumstoffmaterial.

13. Verfahren nach einem der Ansprüche 1 bis 12, **dadurch gekennzeichnet**, daß das Hinterkleidungsmaterial einem Teil oder Teilen oder dem gesamten des geformten Acrylmaterials appliziert wird.

14. Gegenstand, hergestellt aus einem Acrylmaterial und einem Hinterkleidungsmaterial durch ein Verfahren, welches die Schritte beinhaltet:

(1) Formung des Acrylmaterials in eine gewünschte Gestalt;

(2) Applizierung eines Verbindungsmaterials an eine seite des Acrylmaterials, wobei das Verbindungsmaterial mit dem Acrylmaterial und dem Hinterkleidungsmaterial bei umgebungstemperaturen bindet aber welches eine Schichtentrennung des Hinterkleidungematerials von dem Acrylmaterial bei erhöhten Temperaturen von 130 °C an bewirkt, so daß das Acrylmaterial zurückgewonnen werden kann; und

(3) Applizierung des Hinterkleidungsmaterials an das Produkt der Schritte (1) und (2), wobei die Schicht des Verbindungsmaterials zwischen dem Acrylmaterial und dem Hinterkleidungsmaterial angeordnet ist, so daß das Hinterkleidungsmaterial an dem Acrylmaterial haftet, um den Gegenstand zu bilden.

15. Verfahren zur Rückgewinnung eines Acrylmaterials von einem Gegenstand, der aus einem Acrylmaterial und einem Hinterkleidungsmaterial durch ein verfahren hergestellt ist, welches die Schritte beinhaltet:

(1) Formung des Acrylmaterials in eine gewünschte Gestalt;

(2) Applizierung einer Schicht eines Verbindungsmaterials an eine Seite des Acrylmaterials, wobei das Verbindungsmaterial bei Umgebungstemperaturen mit dem Acrylmaterial und dem Hinterkleidungsmaterial bindet, aber welches eine Schichtentrennung des Hinterkleidungsmaterials von dem Acrylmaterial bei erhöhten Temperaturen von 130 °C an bewirkt, so daß das Acrylmaterial zurückgewonnen werden kann; und

(3) Applizierung des Hinterkleidungsmaterials mit dem Produkt der Schritte (1) und (2), wobei die Schicht des Verbindungsmaterials zwischen dem Acrylmaterial und dem Hinterkleidungsmaterial angeordnet ist, so daß das Hinterkleidungsmaterial an dem Acrylmaterial anhaftet, um den Gegenstand zu formen;

wobei das Verfahren die Schritte beinhaltet:

(a) Erwärmung des Artikels auf eine erhöhte Temperatur, so daß das Hinterkleidungsmaterial eine Schichtentrennung von dem Acrylmaterial erfährt; und

(b) Zurückgewinnung des AcrylmateriaLs.

16. verfahren nach Anspruch 15, **dadurch gekennzeichnet**, daß in Schritt (a) die erhöhte Temperatur in dem thermoelastischen Formungsbereich des Acrylmaterials liegt.

17. Verfahren nach Anspruch 16, **dadurch gekennzeichnet**, daß in Schritt (a) die Temperatur in dem Bereich von jeweils einschließlich 140 °C bis 170 °C liegt.

18. Verfahren nach Anspruch 15, **dadurch gekennzeichnet**, daß in Schritt (a) die erhöhte Temperatur in dem Bereich von jeweils einschließlich 130 °C bis 140 °C liegt.

## Revendications

1. Procédé permettant de fabriquer un objet à partir d'un matériau acrylique et d'un matériau de renfort, comprenant les étapes consistant:

(1) à façonner le matériau acrylique selon la forme désirée;
(2) à appliquer sur un côté du matériau acrylique un matériau d'adhérence qui colle au matériau acrylique et au matériau de renfort aux températures ambiantes, mais qui provoque la déstratification du matériau de renfort et du matériau acrylique à des températures élevées supérieures à 130°C de façon à ce que le matériau acrylique puisse être récupéré; et
(3) à appliquer au produit des étapes (1) et (2), le matériau de renfort avec une couche du matériau d'adhérence entre le matériau acrylique et le matériau de renfort de façon à ce que le matériau de renfort adhère au matériau acrylique pour former l'objet.

2. Procédé selon la revendication 1, dans lequel l'étape (1) est effectuée avant l'étape (2).

3. Procédé selon la revendication 1, dans lequel l'étape (2) est effectuée avant l'étape (1).

4. Procédé selon l'une quelconque des revendications 1 à 3, dans lequel le matériau acrylique est un matériau acrylique en feuille.

5. Procédé selon l'une quelconque des revendications 1 à 4, dans lequel, dans l'étape (1), le matériau acrylique est façonné selon la forme désirée par formage sous vide ou formage à chaud.

6. Procédé selon l'une quelconque des revendications 1 à 5, dans lequel l'étape (2) est effectuée:

(i) en appliquant une couche du matériau d'adhérence sur la surface d'un moule destiné au matériau acrylique; et
(ii) en introduisant le matériau acrylique dans le moule, et en moulant le matériau acrylique en la forme désirée avec une couche du matériau d'adhérence sur celui-ci.

7. Procédé selon l'une quelconque des revendications 1 à 6, dans lequel le matériau d'adhérence est choisi dans le groupe comprenant:

(A) une composition d'un matériau polymère dans un solvant de celui-ci; et
(B) un film d'un matériau polymère.

**8.** Procédé selon la revendication 7, dans lequel le matériau polymère est un polymère de polyuréthane.

**9.** Procédé selon la revendication 7, dans lequel le matériau polymère est choisi dans le groupe constitué du polystyrène choc, du polystyrène, de l'acrylonitrile - styrène - butadiène, du polyméthacrylate de méthyle, du styrène acrylonitrile, du polystyrène cristal, du polystyrène de haut poids moléculaire, du polychlorure de vinyle, de l'acrylique - styrène - acrylonitrile, et du styrène butadiène, chacun étant utilisé soit seul, soit en combinaison les uns avec les autres, soit en combinaison avec un polymère de polyuréthane.

**10.** Procédé selon la revendication 9, dans lequel le matériau polymère est un polystyrène de haut poids moléculaire dissous dans un solvant servant de véhicule.

**11.** Procédé selon la revendication 10, dans lequel le solvant approprié servant de véhicule est la méthyléthylcétone.

**12.** Procédé selon l'une quelconque des revendications 1 à 11, dans lequel, dans l'étape (3), le matériau de renfort est choisi dans le groupe constitué d'une matière plastique renforcée avec des fibres de verre, d'une matière plastique renforcée avec des fibres autres que des fibres de verre, et d'un matériau à base de mousse de polyuréthane.

**13.** Procédé selon l'une quelconque des revendications 1 à 12, dans lequel le matériau de renfort est appliqué sur une partie ou sur des parties ou sur la totalité du matériau acrylique façonné.

**14.** Objet fabriqué à partir d'un matériau acrylique et d'un matériau de renfort grâce à un procédé qui comprend les étapes consistant:

(1) à façonner le matériau acrylique selon la forme désirée;
(2) à appliquer sur un côté du matériau acrylique un matériau d'adhérence qui colle au matériau acrylique et au matériau de renfort aux températures ambiantes, mais qui provoque la déstratification du matériau de renfort et du matériau acrylique à des températures élevées supérieures à 130°C de façon à ce que le matériau acrylique puisse être récupéré; et
(3) à appliquer au produit des étapes (1) et (2), le matériau de renfort avec une couche du matériau d'adhérence entre le matériau acrylique et le matériau de renfort de façon à ce que le matériau de renfort adhère au matériau acrylique pour former l'objet.

**15.** Procédé permettant de récupérer un matériau acrylique à partir d'un objet fabriqué avec un matériau acrylique et un matériau de renfort selon un procédé qui comprend les étapes consistant:

(1) à façonner le matériau acrylique selon la forme désirée;
(2) à appliquer sur un côté du matériau acrylique une couche d'un matériau d'adhérence qui colle au matériau acrylique et au matériau de renfort aux températures ambiantes, mais qui provoque la déstraLification du matériau de renfort et du matériau acrylique à des températures élevées supérieures à 130°C de façon à ce que le matériau acrylique puisse être récupéré; et
(3) à appliquer au produit des étapes (1) et (2), le matériau de renfort avec une couche du matériau d'adhérence entre le matériau acrylique et le matériau de renfort de façon à ce que le matériau de renfort adhère au matériau acrylique pour former l'objet;

lequel procédé comprend les étapes consistant:

(a) à chauffer l'objet jusqu'à une température élevée de façon à ce que le matériau de renfort se déstratifie du matériau acrylique; et
(b) à récupérer le matériau acrylique.

**16.** Procédé selon la revendication 15, dans lequel, dans l'étape (a), la température élevée est située dans l'intervalle de façonnage thermo-élastique du matériau acrylique.

**17.** Procédé selon la revendication 16, dans lequel, dans l'étape (a), la température est située entre 140°C et 170°C incluses.

**18.** Procédé selon la revendication 15, dans lequel, dans l'étape (a), la température élevée est située entre 130°C et

140°C incluses.